# FASCICULE DE BREVET EUROPEEN

(11) **EP 3 857 512 B1**
(45) Date de publication et mention de la délivrance du brevet: **25.11.2026**
(21) Numéro de dépôt: 19790651.4
(22) Date de dépôt: 17.09.2019
(51) Int. Cl.: G06T 7/73

(54) **PROCÉDÉ, PROGRAMME D'ORDINATEUR ET SYSTÈME DE DÉTECTION ET LOCALISATION D'OBJET DANS UNE SCÈNE TRIDIMENSIONNELLE**
VERFAHREN, COMPUTERPROGRAMM UND SYSTEM ZUR OBJEKTDETEKTION UND -LOKALISIERUNG IN EINER DREIDIMENSIONALEN SZENE
METHOD, COMPUTER PROGRAM AND SYSTEM FOR OBJECT DETECTION AND LOCATION IN A THREE-DIMENSIONAL SCENE

(30) Priorité: 25.09.2018 FR 1858743
(43) Date de publication de la demande: 04.08.2021
(73) Titulaire: Commissariat à l'Energie Atomique et aux Energies Alternatives, 75015 Paris (FR)
(72) Inventeur: MAYRAN DE CHAMISSO, Fabrice, 77140 Nemours (FR); TAMAAZOUSTI, Mohamed, 92140 Clamart (FR); MEDEN, Boris, 92140 Clamart (FR)
(74) Mandataire: Bonnet, Michel
(86) Numéro de dépôt international: PCT/FR2019/052156
(87) Numéro de publication internationale: WO 2020/065177

(56) Documents cités:
- WO-A1-2016/209420
- FREDERIK BEUTLER ET AL: "Instantaneous pose estimation using rotation vectors", ACOUSTICS, SPEECH AND SIGNAL PROCESSING, 2009. ICASSP 2009. IEEE INTERNATIONAL CONFERENCE ON, IEEE, PISCATAWAY, NJ, USA, 19 April 2009 (2009-04-19), pages 3413 - 3416, XP031460004, ISBN: 978-1-4244-2353-8
- JAMES DIEBEL: "Representing Attitude: Euler Angles, Unit Quaternions, and Rotation Vectors", 20 October 2006 (2006-10-20), XP055626235, Retrieved from the Internet <URL:https://www.astro.rug.nl/software/kapteyn-beta/_downloads/attitude.pdf>
- STOCKMAN G: "OBJECT RECOGNITION AND LOCALIZATION VIA POSE CLUSTERING", COMPUTER VISION GRAPHICS AND IMAGE PROCESSING, ACADEMIC PRESS, DULUTH, MA, US, vol. 40, no. 3 + INDEX, 1 December 1987 (1987-12-01), pages 361 - 387, XP000029192

## Description

La présente invention concerne un procédé de détection et de localisation tridimensionnelle d'au moins une instance d'au moins un objet dans des données de représentation d'une scène tridimensionnelle. Elle concerne également un programme d'ordinateur et un système correspondants.

D'une façon générale, elle s'inscrit dans le domaine industriel de la reconnaissance d'objets rigides ou quasi-rigides en vision tridimensionnelle par ordinateur. Elle nécessite une comparaison des données de représentation de la scène tridimensionnelle avec celles d'au moins un modèle d'objet rigide ou quasirigide à détecter et localiser dans la scène, pour une détection et localisation d'objet par recalage, c'est-à-dire par la détermination d'au moins un jeu de paramètres de transformation en translation et rotation pour la mise en correspondance d'au moins une instance d'objet dans la scène tridimensionnelle avec le modèle d'objet correspondant, ce dernier étant éventuellement défini dans un macro-modèle tridimensionnel.

Par « modèle d'objet » dans ce contexte tridimensionnel, on entend une représentation prédéterminée d'un objet faisant référence. Elle peut consister en une représentation modélisée, par exemple par ordinateur, en trois dimensions spatiales d'un objet réel sous forme de nuage tridimensionnel de points, d'ensemble maillé de faces (de l'anglais « mesh ») ou de toute autre représentation mathématique (implicite, paramétrique, etc.) pouvant être convertie en un nuage tridimensionnel de points. Elle peut aussi être issue d'une capture de scène réelle, à l'aide d'un ou plusieurs capteurs, dans laquelle la représentation de l'objet en nuage tridimensionnel de points et sa disposition sont suffisamment contrôlées pour faire référence. Par « macro-modèle », on entend une scène modélisée ou réelle de référence comportant un ou plusieurs modèles d'objets dont la disposition dans cette scène modélisée ou réelle de référence est prédéfinie et connue.

Les applications concrètes sont multiples et incluent :
- la localisation tridimensionnelle, par exemple en réalité virtuelle, augmentée ou mixte, d'un système tel qu'un véhicule, notamment un véhicule autonome, un piéton, un robot ou un dispositif portatif, par des techniques de cartographie et localisation simultanées (de l'anglais « Simultaneous Localization And Mapping »),
- la reconstitution tridimensionnelle d'une scène à partir d'observations partielles complémentaires,
- la reconstitution tridimensionnelle de scène par recalage tridimensionnel d'une scène sur une autre, l'une de ces deux scènes faisant référence,
- l'analyse d'une scène tridimensionnelle incluant une reconnaissance et une localisation d'objets dans cette scène,
- l'inspection automatique et temps réel d'objets fabriqués industriellement, en particulier pour une recherche de défauts,
- la préhension robotique et la manipulation robotisée d'objets dans l'espace, à l'aide notamment d'au moins un bras articulé industriel et/ou dans une chaîne d'assemblage par exemple.

La dernière application inclut notamment le dévracage (de l'anglais « bin picking ») consistant à reconnaître puis déplacer successivement ou simultanément, à l'aide d'un ou plusieurs bras de robots, des objets en vrac dans une chaîne de production ou dans un lieu de stockage.

Le principe de la détection et de la localisation d'objet par recalage rigide sur un modèle est très étudié dans l'état de la technique. Selon une chaîne de traitement bien établie et enseignée par exemple dans le document de brevet US 8,830,229 B2, il comporte les étapes suivantes :
- obtention de jeux de paramètres de transformation en translation et rotation pour des mises en correspondance tridimensionnelle respectives de points particuliers de chaque instance supposée dudit au moins un objet dans la scène tridimensionnelle avec leurs dispositions dans le macro-modèle tridimensionnel,
- à partir de ces jeux de paramètres point à point et si au moins une instance d'objet est effectivement présente dans la scène tridimensionnelle, détermination d'au moins un jeu de paramètres de transformation en translation et rotation pour la mise en correspondance tridimensionnelle d'au moins une instance d'objet de la scène tridimensionnelle avec au moins un modèle d'objet du macro-modèle tridimensionnel, et
- de façon optionnelle, vérification de la ou des transformations déterminées.

En ce qui concerne la première étape, elle consiste généralement à prétraiter les données de représentation de la scène tridimensionnelle obtenues par un ou plusieurs capteurs, à sélectionner des points particuliers d'intérêt à mettre en correspondance dans la scène et dans le macro-modèle, à calculer des descripteurs locaux ou globaux destinés à être associés à ces points particuliers sélectionnés pour faciliter et améliorer la mise en correspondance, puis à réaliser la mise en correspondance proprement dite. Le détail de cette étape fait l'objet de nombreuses recherches et propositions de solutions dans l'état de la technique, mais il ne fait pas l'objet principal de la présente invention.

En ce qui concerne la deuxième étape, elle est également le sujet de nombreuses recherches dans l'état de la technique. Mais les solutions proposées souffrent généralement de limitations en termes de sensibilité aux données d'initialisation, de nombre d'instances ou modèles d'objets pouvant être traités simultanément, de représentation des paramètres de transformation en translation et rotation, de discrétisation de l'espace des transformations, etc.

Par exemple, une première famille de solutions est enseignée dans l'article de Besl et al, intitulé « A method for registration of 3-D shapes », publié dans IEEE Transactions on Pattern Analysis and Machine Intelligence, volume 14, n° 2, février 1992, pages 239 à 256. Cette méthode appelée ICP (de l'anglais « Iterative Closest Point ») aboutit à une très bonne convergence locale, mais dépend donc très fortement des données d'initialisation. Pour cela, elle est souvent retenue pour être exécutée lors de la troisième étape de vérification, après application d'une autre méthode plus robuste mais moins précise en deuxième étape. En outre, pour un recalage de plusieurs instances d'objets sur plusieurs modèles d'objets, plusieurs initialisations et plusieurs régularisations a posteriori sont successivement nécessaires.

Une deuxième famille de solutions est enseignée dans l'article de Papazov et al, intitulé « Rigid 3D geometry matching for grasping of known objects in cluttered scenes », publié dans The International Journal of Robotics Research, volume 31, n° 4, mars 2012, pages 538 à 553. Cette méthode, qui se base sur un algorithme appelé RANSAC, procède d'une sélection aléatoire d'hypothèses suivie d'une phase itérative de tests et raffinements. Elle est moins précise que la précédente et son coût de calcul, proportionnel au cube de la taille des données en entrée, peut s'avérer très important. Elle est également relativement sensible aux données d'initialisation. Enfin, comme la méthode ICP, elle semble n'être prévue que pour le recalage d'une seule instance d'objet sur un seul modèle.

Une troisième famille de solutions est enseignée dans l'article de Tombari et al, intitulé « Object recognition in 3D scenes with occlusions and clutter by Hough voting », publié dans Proceedings of the 2010 Fourth Pacific-Rim Symposium on Image and Video Technology, 2010, pages 349 à 355, et dans l'article de Khoshelham, intitulé « Extending generalized Hough transform to detect 3D objects in laser range data », publié dans Proceedings of the ISPRS Workshop on Laser Scanning, septembre 2007, pages 206 à 210. La méthode est basée sur la constitution d'un histogramme par transformations de Hough 3D (dans l'article de Tombari et al) ou 6D (dans l'article de Khoshelham). L'espace des paramètres de transformation est donc discrétisé, de façon plus ou moins pertinente, et la méthode est malheureusement gourmande en place mémoire. Par ailleurs, aucun de ces documents ne propose de représentation satisfaisante des paramètres de transformation en rotation, de sorte que cela engendre des problèmes pour les rotations d'angles proches de la césure +/- π et de possibles blocages de cardan (de l'anglais « gimbal locks »).

Une quatrième famille de solutions est par exemple enseignée dans l'article de Guo et al, intitulé « Rotational projection statistics for 3D local surface description and object recognition », publié dans International Journal of Computer Vision, volume 105, n° 1, octobre 2013, pages 63 à 86. Selon cette méthode, chaque jeu de paramètres de transformation obtenu à l'issue de la première étape précitée est exprimé dans un système de coordonnées à au moins six dimensions incluant trois dimensions pour la translation et trois dimensions pour la rotation. Ensuite, les jeux de paramètres de transformation ainsi exprimés sont regroupés par classification automatique, chaque classe éventuellement obtenue étant représentative d'une unique instance d'objet trouvée dans la scène tridimensionnelle et d'un unique jeu de paramètres de transformation pour une mise en correspondance avec un unique modèle dans le macro-modèle tridimensionnel. Des méthodes de classification automatique sont bien connues dans l'état de l'art : par exemple des méthodes par k-moyennes, des méthodes par regroupement hiérarchique, ou bien encore des méthodes itératives par expansion progressive de classe(s). La présente invention s'applique plus particulièrement à un procédé de détection et de localisation conforme à cette quatrième famille de solutions.

Mais la solution particulière proposée dans l'article de Guo et al souffre d'une représentation angulaire de la transformation en rotation non isotrope, par angles d'Euler, qui ne permet pas de surmonter les problèmes de césure +/- π et de blocages de cardan. Cette représentation n'est en outre pas adaptée pour le calcul simple d'une moyenne, un tel calcul étant pourtant intuitivement avantageux pour l'estimation d'un unique jeu de paramètres de transformation représentatif d'une classe constituée. Cela peut conduire à des résultats imprévisibles sous certaines conditions initiales. Elle n'apparaît pas non plus, à l'usage, adaptée à la représentation classique de la transformation en translation, sans qu'il soit simple de comprendre réellement pourquoi, ce qui complique le paramétrage de la méthode de classification, notamment pour calculer des distances entre jeux de paramètres. Par ailleurs, la classification automatique proposée, par regroupement des jeux de paramètres de transformation dans des ellipsoïdes qu'il est très délicat de paramétrer, n'est pas robuste et reste trop dépendante de seuils prédéterminés. En outre, il n'est pas indiqué comment gérer le recalage de plusieurs instances d'objets dans la scène sur plusieurs modèles d'objets dans le macro-modèle.

Il peut ainsi être souhaité de prévoir un procédé de détection et de localisation tridimensionnelle d'au moins une instance d'au moins un objet dans des données de représentation d'une scène tridimensionnelle qui permette de s'affranchir d'au moins une partie des problèmes et contraintes précités.

Il est donc proposé un procédé de détection et de localisation tridimensionnelle d'au moins une instance d'au moins un objet dans des données de représentation d'une scène tridimensionnelle par comparaison avec au moins un modèle dudit au moins un objet dans des données de représentation d'un macro-modèle tridimensionnel dudit au moins un objet, comportant les étapes suivantes :
- obtention de jeux de paramètres de transformation en translation et rotation pour des mises en correspondance tridimensionnelle respectives de points particuliers de chaque instance supposée dudit au moins un objet dans la scène tridimensionnelle avec leurs dispositions dans le macro-modèle tridimensionnel,
- expression de chaque jeu de paramètres de transformation dans un système de coordonnées à plusieurs dimensions incluant au moins une dimension pour la translation et au moins une dimension pour la rotation,
- classification automatique desdits jeux de paramètres de transformation, chaque classe éventuellement obtenue étant représentative d'une unique instance dudit au moins un objet trouvée dans la scène tridimensionnelle et d'un unique jeu de paramètres de transformation pour une mise en correspondance avec un unique modèle dans le macro-modèle tridimensionnel,
dans lequel :
- l'expression de chaque jeu de paramètres de transformation se fait sous la forme d'un vecteur de transformation incluant une expression de ladite au moins une dimension de rotation en tant que coordonnée(s) d'un sous-vecteur de rotation de ce vecteur de transformation, telle que l'orientation du sous-vecteur de rotation est normale au plan de rotation et sa norme est en relation monotone croissante avec l'angle de rotation exprimé entre 0 et π,
- la classification automatique est exécutée sur la base d'une fonction de mesure de distances entre lesdits vecteurs de transformation.

Ainsi, la représentation proposée de l'amplitude (entre 0 et π) de l'angle de rotation dans la norme du sous-vecteur de rotation dont la direction est celle de la normale au plan de rotation permet à la fois de surmonter le problème d'anisotropie (i.e. tous les angles sont considérés de manière équivalente, aucun n'étant privilégié) et celui de blocage de cardan. Elle permet en outre de rendre le sous-vecteur de rotation cohérent avec la représentation vectorielle habituelle de toute translation : la direction d'un sous-vecteur de translation est directement celle de la translation et sa norme exprime directement l'amplitude de la translation. L'expression vectorielle de chaque jeu de paramètres de transformation s'en trouve ainsi optimisée pour tout calcul de distance et de moyenne. La distance mesurée entre vecteurs de transformations est alors judicieusement exploitée de façon optimale pour l'exécution pertinente d'une classification automatique quelle qu'elle soit, le résultat de cette dernière s'en trouvant logiquement amélioré.

De façon optionnelle, ladite au moins une dimension de translation est exprimée en tant que coordonnée(s) d'un sous-vecteur de translation du vecteur de transformation et :
- chaque coordonnée du sous-vecteur de translation est normalisée sur une dimension des données du macro-modèle et/ou de la scène tridimensionnelle, de sorte qu'une amplitude de variations de la norme de ce sous-vecteur de translation reste inférieure ou égale à 1, et
- chaque coordonnée du sous-vecteur de rotation est normalisée en imposant que la norme du sous-vecteur de rotation soit égale à l'angle de rotation divisé par π lorsqu'il est exprimé entre 0 et π.

De façon optionnelle également, la classification automatique desdits jeux de paramètres de transformation est une classification itérative par expansion progressive de classe.

De façon optionnelle également :
- l'étape d'expression de chaque jeu de paramètres de transformation comporte une indexation de chaque vecteur de transformation obtenu dans une structure de recherche, notamment un arbre de recherche, notamment un arbre binaire, notamment un arbre k-d,
- l'expansion progressive de chaque classe au cours de l'étape itérative de classification automatique est exécutée par recherche de voisins dans la structure de recherche à l'aide de ladite fonction de mesure de distances entre lesdits vecteurs de transformation.

De façon optionnelle également, lors de l'étape d'expression de chaque jeu de paramètres de transformation, on détecte pour chaque sous-vecteur de rotation si sa norme est proche d'une valeur de césure à un premier paramètre de voisinage près et on duplique chaque vecteur de transformation en deux instances dont les sous-vecteurs de rotations sont liés par un facteur additif de modulo que l'on indexe dans la structure de recherche.

De façon optionnelle également, lors de l'étape de classification automatique, chaque vecteur de transformation ayant un nombre de voisins inférieur à un deuxième paramètre de voisinage prédéterminé est considéré comme une donnée aberrante et écarté de toute classe résultant de la classification automatique.

De façon optionnelle également, lors de l'expression de chaque jeu de paramètres de transformation dans le système de coordonnées à plusieurs dimensions, on impose que la norme du sous-vecteur de rotation soit proportionnelle à l'angle de rotation exprimé entre 0 et π.

De façon optionnelle également les données de représentation de la scène tridimensionnelle comportent une représentation numérique en imagerie tridimensionnelle de cette scène et les données de représentation du macro-modèle tridimensionnel comportent une représentation numérique en imagerie tridimensionnelle de ce macro-modèle.

Il est également proposé un programme d'ordinateur téléchargeable depuis un réseau de communication et/ou enregistré sur un support lisible par ordinateur et/ou exécutable par un processeur, comprenant des instructions pour l'exécution des étapes d'un procédé de détection et de localisation selon l'invention, lorsque ledit programme est exécuté sur un ordinateur.

Il est également proposé un système de détection et de localisation tridimensionnelle d'au moins une instance d'au moins un objet dans des données de représentation d'une scène tridimensionnelle par comparaison avec au moins un modèle dudit au moins un objet dans des données de représentation d'un macro-modèle tridimensionnel dudit au moins un objet, le système comportant :
- au moins une mémoire de stockage des données de représentation de la scène tridimensionnelle et des données de représentation du macro-modèle tridimensionnel, et
- un processeur de mise en correspondance de chaque instance dudit au moins un objet dans la scène tridimensionnelle avec un unique modèle dans le macro-modèle tridimensionnel, programmé pour l'exécution des étapes d'un procédé de détection et de localisation selon l'invention.

L'invention sera mieux comprise à l'aide de la description qui va suivre, donnée uniquement à titre d'exemple et faite en se référant aux dessins annexés dans lesquels :
- la figure 1 représente schématiquement un exemple de représentation numérique en imagerie tridimensionnelle d'un macro-modèle tridimensionnel comportant plusieurs modèles d'objets,
- la figure 2 représente schématiquement un exemple de représentation numérique en imagerie tridimensionnelle d'une scène tridimensionnelle comportant plusieurs instances d'objets,
- la figure 3 représente schématiquement la structure générale d'un système de détection et de localisation tridimensionnelle d'au moins une instance d'objet dans des données de représentation de scène tridimensionnelle telles que celles de la figure 2, selon un mode de réalisation de l'invention,
- la figure 4 illustre les étapes successives d'un procédé de détection et de localisation tridimensionnelle d'au moins une instance d'objet mis en oeuvre par le système de la figure 3.

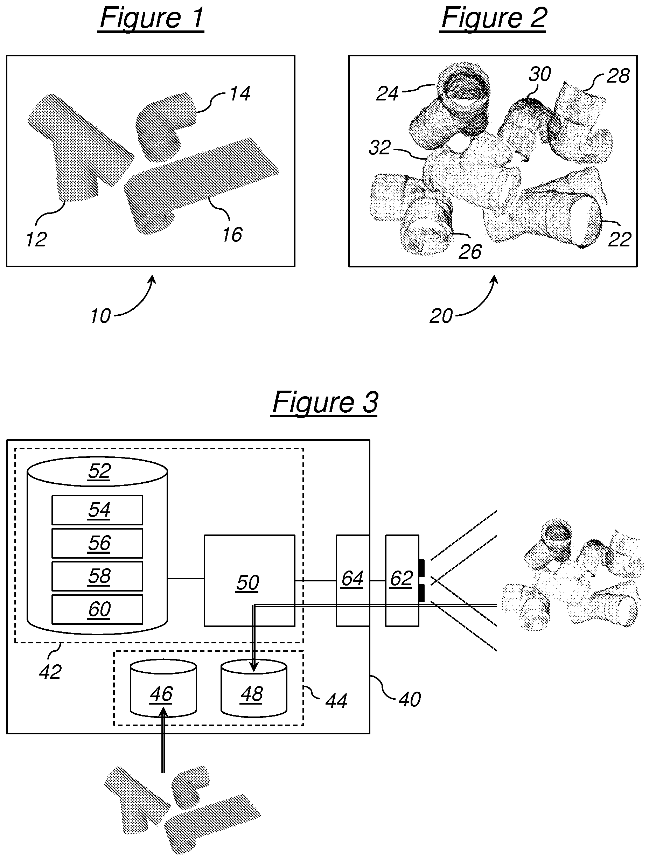

Le macro-modèle tridimensionnel 10 représenté sur la figure 1 est une scène artificielle constituée de modèles d'objets artificiels. Il pourrait aussi s'agir d'une scène réelle de référence constituée de modèles d'objets réels dont la disposition est connue et maîtrisée. Il est ici constitué de trois modèles d'objets choisis à titre d'exemple illustratif. Un premier modèle tridimensionnel 12 représente un raccord de tuyau en T incliné. Un deuxième modèle tridimensionnel 14 représente un raccord de tuyau en coude. Un troisième modèle tridimensionnel 16 représente un profilé à enroulement de l'une de ses extrémités. Ces trois modèles d'objets sont disposés et parfaitement localisables dans un référentiel tridimensionnel lié au macro-modèle 10. Ils sont représentés comme indiqué précédemment sous forme de nuage tridimensionnel de points, d'ensemble maillé de faces ou de toute autre représentation mathématique pouvant être convertie en un nuage tridimensionnel de points. Pour des raisons de clarté évidentes, les modèles 12, 14 et 16 sont bien séparés les uns des autres dans le macro-modèle 10 de la figure 1. Mais ils pourraient avantageusement être superposés en étant tous centrés dans le macro-modèle 10, tout en restant distinguables à l'aide de labels distinctifs associés aux points qui les constituent. Avantageusement, leur échantillonnage est le même ou au moins similaire.

La scène tridimensionnelle 20 représentée sur la figure 2 résulte d'une capture tridimensionnelle obtenue à l'aide d'un capteur 3D d'une scène réelle. Elle est constituée de points tridimensionnels ou « points 3D » d'un référentiel qui lui est propre, indiquant chacun par une information de nuance de gris ou de couleur la présence d'instances réelles d'objets dans la scène réelle. On y distingue ici, à titre d'exemple illustratif deux instances d'objets 22 et 24 correspondant au modèle de raccord de tuyau en T incliné 12, trois instances d'objets 26, 28 et 30 correspondant au modèle de raccord de tuyau en coude 14, une instance d'objet 32 de type raccord de tuyau en T droit n'ayant pas de modèle correspondant dans le macro-modèle 10 et aucune instance d'objet correspondant au modèle de profilé 16. On remarquera que certaines instances d'objets de la scène 20 peuvent n'être que partiellement visibles.

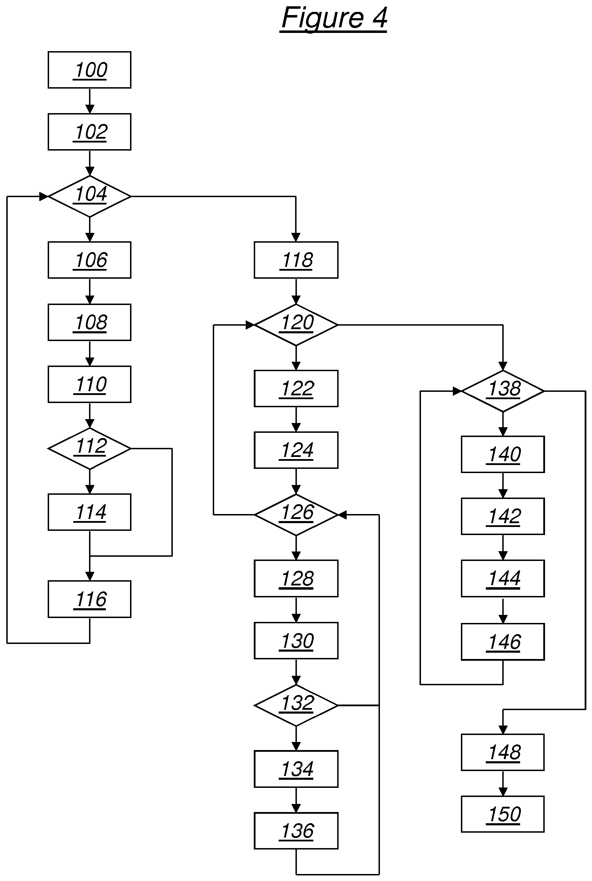

Conformément à un système/procédé de détection et de localisation tridimensionnelle des instances d'objets 22 à 32 dans des données de représentation de la scène tridimensionnelle 20, par comparaison avec les modèles d'objets 12, 14 et 16 dans des données de représentation du macro-modèle tridimensionnel 10, tel que celui qui va être détaillé en références aux figures 3 et 4, une correspondance doit pouvoir être établie entre chaque instance d'objet pouvant être identifiée et reconstituée dans la scène tridimensionnelle 20 et l'un des modèles 12, 14 et 16. Cette correspondance consiste à retrouver les paramètres d'une transformation rigide en translation, en rotation, et éventuellement en changement d'échelle (agrandissement ou réduction de taille), qui permet le cas échéant de passer du positionnement de chaque instance d'objet dans la scène 20 vers celui de son modèle dans le macro-modèle 10, ou inversement, du positionnement de chaque modèle dans le macro-modèle 10 vers celui d'une instance d'objet qui lui correspond dans la scène 20. En particulier, dans le cas des figures 1 et 2 où plusieurs correspondances doivent pouvoir être établies, un système/procédé de détection et de localisation tridimensionnelle selon l'invention permet potentiellement de réaliser cet objectif en une seule exécution pour plusieurs instances et plusieurs modèles d'objets par classification automatique.

Le système 40 de détection et de localisation tridimensionnelle des instances d'objets 22 à 32, tel que représenté schématiquement sur la figure 3, comporte une unité de traitement 42 associée de façon classique à une mémoire 44 (par exemple une mémoire RAM). Cette mémoire 44 stocke par exemple notamment des données 46 de représentation du macro-modèle 10 et des données 48 de représentation de la scène 20.

L'unité de traitement 42 peut être mise en oeuvre dans un dispositif informatique tel qu'un ordinateur classique comportant un processeur associé à une ou plusieurs mémoires pour le stockage de fichiers de données et de programmes d'ordinateurs. L'unité de traitement 42 peut alors elle-même être considérée comme formée d'un processeur 50 de mise en correspondance d'instances et de modèles d'objets associé à une mémoire 52 de stockage des instructions qu'il exécute sous forme de programmes d'ordinateurs. Lorsqu'au moins une partie des instructions peut être exécutée en parallèle, ce qui est le cas dans certains modes de réalisation de la présente invention comme cela sera vu ultérieurement en référence à la figure 4, le processeur peut être optionnellement adapté pour un tel parallélisme, par exemple sous la forme d'un processeur GPU (de l'anglais « Graphic Processing Unit »).

Parmi ces programmes d'ordinateurs, un premier programme 54 est par exemple conçu pour l'exécution d'une méthode d'obtention de jeux de paramètres de transformation en translation, rotation et éventuellement changement d'échelle pour des mises en correspondance tridimensionnelle respectives de points particuliers d'instances d'objets dans la scène tridimensionnelle 20 avec leurs dispositions dans l'un des modèles du macro-modèle tridimensionnel 10. Une telle méthode est connue et ne sera pas détaillée. Un deuxième programme 56 est par exemple conçu pour l'exécution d'un premier traitement sur les jeux de paramètres de transformation obtenus par le premier programme 54, de manière notamment à optimiser leur expression par transcodage en vue d'une classification automatique à réaliser dans un espace approprié de représentation de ces paramètres. Un troisième programme 58 est par exemple conçu pour exécuter la classification automatique, chaque classe éventuellement obtenue en sortie étant représentative d'une unique instance d'objet dans la scène tridimensionnelle 20 et d'un unique jeu de paramètres de transformation pour une mise en correspondance avec un unique modèle dans le macro-modèle tridimensionnel 10. Enfin, un quatrième programme 60 est par exemple conçu pour exécuter un deuxième traitement sur chaque jeu de paramètres de transformation représentatif de chaque classe obtenue en sortie en vue de le transcoder (par exemple un transcodage inverse du premier traitement) en un jeu de paramètre exprimé selon un format souhaité en sortie. Par exemple, le quatrième programme 60 peut être tout simplement conçu pour inverser le traitement du deuxième programme 56.

L'unité de traitement 42 telle qu'illustrée sur la figure 3 comporte ainsi fonctionnellement quatre programmes d'ordinateur ou quatre fonctions d'un même programme d'ordinateur. On notera en effet que les programmes d'ordinateur 54, 56, 58, 60 sont présentés comme distincts, mais cette distinction est purement fonctionnelle. Ils pourraient tout aussi bien être regroupés selon toutes les combinaisons possibles en un ou plusieurs logiciels. Leurs fonctions pourraient aussi être au moins en partie micro programmées ou micro câblées dans des circuits intégrés dédiés. Ainsi, en variante, le dispositif informatique mettant en oeuvre l'unité de traitement 42 pourrait être remplacé par un dispositif électronique composé uniquement de circuits numériques (sans programme d'ordinateur) pour la réalisation des mêmes actions.

L'installation de la figure 3 peut comporter, outre le système 40 de détection et de localisation tridimensionnelle des instances d'objets 22 à 32, un capteur 3D 62 d'obtention des données de représentation de la scène tridimensionnelle 20. Un tel capteur 3D n'est pas détaillé parce qu'il est bien connu de l'homme du métier. Par généralisation, il peut être constitué d'une combinaison de plusieurs capteurs, pour plusieurs vues ou modalités de détection. Selon une variante de réalisation possible, le système 40 de détection et de localisation tridimensionnelle est autonome et distant du capteur 3D 62. Il comporte alors une interface 64 de (télé)communication avec ce capteur 3D 62, avec ou sans fil, gérée par le processeur 50 de mise en correspondance d'instances et de modèles d'objets. Selon une autre variante de réalisation possible, le système 40 pourrait être embarqué dans le capteur 3D 62 ou, réciproquement, le capteur 3D 62 pourrait être intégré dans le système 40.

Un procédé de détection et de localisation tridimensionnelle d'au moins une instance d'au moins un objet dans des données de représentation d'une scène tridimensionnelle, par comparaison avec au moins un modèle dudit au moins un objet dans des données de représentation d'un macro-modèle tridimensionnel dudit au moins un objet, mis en oeuvre par le système 40 de la figure 3, par exemple à l'aide du macro-modèle 10 de la figure 1 pour une analyse de la scène 20 de la figure 2, va maintenant être détaillé en référence à la figure 4.

Lors d'une première étape d'initialisation 100, diverses données et paramètres sont préalablement définis et renseignés :
- le macro-modèle 10 est constitué : il s'agit entre autres de définir les modèles d'objets 12, 14, 16, de les positionner dans le macro-modèle 10, de calculer la taille et le centre du macro-modèle 10, puis d'enregistrer les données de représentation 46 correspondantes en mémoire 44,
- la scène tridimensionnelle 20 est constituée : il s'agit entre autres de la capturer à l'aide du capteur 3D 62, d'en calculer le centre et éventuellement la taille, puis d'enregistrer les données de représentation 48 correspondantes en mémoire 44,
- un rayon de recherche RS est défini : il sera utilisé par le deuxième programme 56 de traitement de jeux de paramètres de transformation pour une détection des rotations proches de la césure +/- π et par le troisième programme 58 de classification automatique pour une classification par expansion progressive de classes à l'aide de ce paramètre de voisinage,
- un nombre minimal de voisins NV est défini (par exemple NV = 5) : il sera également utilisé par le troisième programme 58 de classification automatique pour la classification par expansion progressive de classes précitée à l'aide également de ce paramètre de voisinage, et
- une structure de recherche est créée et initialisée : elle sera complétée par le deuxième programme 56 de traitement de jeux de paramètres de transformation en y indexant leurs expressions optimisées par transcodage, en vue d'être ensuite utilisée par le troisième programme 58 de classification automatique pour des recherches de voisins.

Au cours d'une étape 102 suivante, le premier programme 54 est exécuté par le processeur 50 pour l'obtention de jeux de paramètres de transformation en translation, rotation et éventuellement changement d'échelle pour des mises en correspondance tridimensionnelle respectives de points particuliers des instances d'objets 22, 24, 26, 28 et 30 avec les modèles d'objets 12 et 14. Comme indiqué précédemment, aucun modèle du macro-modèle 10 ne correspond à l'instance d'objet 32 qui ne pourra donc pas être identifiée dans la scène 20 et aucune instance d'objet ne correspond au modèle 16.

Selon les méthodes connues de recalage point à point à l'aide de descripteurs locaux et globaux, chaque jeu de paramètres de transformation point à point comporte généralement une matrice 4x4 de translation et rotation et éventuellement un paramètre de changement d'échelle. Il existe principalement deux méthodes pour représenter une rotation et une translation à l'aide d'une matrice 4x4 : soit la rotation est appliquée en premier et la translation ensuite, soit on applique d'abord la translation à laquelle a été au préalable appliquée l'inverse de la rotation, puis on applique la rotation. Dans un mode de réalisation préféré de la présente invention, c'est la première option qui est choisie. Le paramètre de changement d'échelle prend la forme d'un nombre réel positif, compris entre 0 et 1 s'il exprime une réduction et supérieur à 1 s'il exprime un agrandissement. Il peut être intégré à la matrice 4x4 en tant que coefficient multiplicatif. Selon le mode de réalisation préféré, chaque jeu de paramètres de transformation point à point indique la transformation d'un point d'une instance d'objet dans la scène 20 vers un point d'un modèle de cet objet dans le macro-modèle 10. Selon une variante préférée également, chaque matrice 4x4 de translation et rotation peut être associée à un indice de confiance (nombre réel positif par exemple compris entre 0 et 1) indiquant la qualité et/ou la robustesse de la mise en correspondance.

A l'issue de l'étape 102, le procédé de détection et de localisation tridimensionnelle d'objets passe à une première boucle d'étapes 104 à 116 réalisée par exécution du deuxième programme 56 à l'aide du processeur 50 pour une optimisation de l'expression de chaque jeu de paramètres de transformation en vue d'une classification automatique à réaliser par exécution du troisième programme 58. Lorsque les jeux de paramètres de transformation se présentent sous la forme de matrices 4x4 de translation et rotation (et d'éventuel changement d'échelle), la première boucle d'étapes 104 à 116 consiste à transcoder chacune de ces matrices à seize paramètres redondants en un vecteur positionnant la transformation dans un espace de représentation optimisé non redondant à au plus six ou sept dimensions selon que l'on prend en compte le changement d'échelle ou pas : c'est-à-dire au plus trois dimensions pour la transformation en translation selon les degrés de liberté que l'on souhaite s'autoriser en translation, au plus trois dimensions pour la transformation en rotation selon les degrés de liberté que l'on souhaite s'autoriser en rotation, et une dimension supplémentaire éventuelle pour le changement d'échelle.

La première étape 104 de cette première boucle d'étapes est un test réalisé pour savoir s'il reste encore au moins une matrice 4x4 à transcoder. Si oui, une matrice 4x4 à transcoder est sélectionnée et le procédé passe à une deuxième étape 106 de la première boucle d'étapes. Si non, il passe à une étape 118 de sortie de la première boucle d'étapes.

L'étape 106 consiste à recentrer la matrice 4x4 sélectionnée en tenant compte du centre du macro-modèle 10 et du centre de la scène tridimensionnelle 20 tels que calculés à l'étape 100 comme références pour la transformation considérée. On ramène ainsi le macro-modèle 10 et la scène tridimensionnelle 20 à la même origine.

Ensuite, au cours d'une étape 108, la transformation considérée est exprimée, par transcodage de la matrice 4x4 considérée, sous la forme d'un vecteur de transformation V̅ dans un système de coordonnées à au plus six ou sept dimensions incluant au plus trois dimensions pour la translation, au plus trois dimensions pour la rotation et une éventuelle dernière dimension pour le changement d'échelle. Dans la suite de la description, on optera pour une application autorisant le maximum de degrés de liberté en translation et en rotation, c'est-à-dire six degrés de liberté. Pour cela, les informations de transformation en translation sont extraites de la matrice 4x4 sélectionnée et exprimées dans un sous-vecteur de translation T̅ = (Tx, Ty, Tz) du vecteur de transformation V. Les trois coordonnées de ce sous-vecteur de translation T̅ correspondent aux trois dimensions de translation exprimées dans un repère cartésien à trois axes x̅, y̅ et z̅ correspondant par exemple à trois dimensions principales du macro-modèle 10 et de la scène 20. Les informations de transformation en rotation sont également extraites de la matrice 4x4 sélectionnée et exprimées dans un sous-vecteur de rotation R̅ du vecteur de transformation V. Conformément à la présente invention, l'expression des trois dimensions de rotation est transcodée pour que l'orientation du sous-vecteur de rotation R̅ soit normale au plan de rotation et pour que sa norme soit en relation monotone croissante avec l'angle de rotation, noté θ, exprimé entre 0 et π. Plus précisément, on peut avantageusement imposer à cette étape que la norme du sous-vecteur de rotation R̅ soit proportionnelle à l'angle de rotation θ, voire même égale à θ. En d'autres termes, le sous-vecteur de rotation R̅ peut s'écrire R̅ = θu̅, où u̅ est un vecteur unitaire dont l'orientation est normale au plan de rotation. Il est toujours possible de définir n'importe quelle rotation sous cette forme. Enfin, l'information de changement d'échelle est le cas échéant également extraite de la matrice 4x4 sélectionnée et exprimée par un paramètre α. Le vecteur de transformation prend alors la forme V̅ = (T̅, R̅, α) à sept dimensions ou V̅ = (T̅, R̅) à six dimensions.

Un vecteur de transformation présentant un nombre inférieur de dimensions peut aussi être envisagé en réduisant le nombre de degrés de liberté en translation et/ou rotation. Par exemple, si l'on considère une application où les objets à localiser dans la scène 20 sont nécessairement dans un plan connu à l'avance, on peut limiter la transformation en translation à deux dimensions (dans le plan connu) et celle en rotation à une dimension (autour d'un unique axe normal au plan connu), d'où un vecteur de transformation à trois ou quatre dimensions.

De façon similaire, des contraintes en termes de pose d'objets dans la scène 20 peuvent se traduire par des équations ou inéquations sur les composantes des vecteurs de transformation, de sorte que certains peuvent être a priori écartés avant même toute classification. A titre d'exemple non limitatif, une contrainte de planéité approximative peut notamment s'écrire comme un produit scalaire, de sous-vecteur de rotation rendu unitaire par la normale au plan considéré, devant rester inférieur au cosinus d'une tolérance angulaire maximale (par exemple 5 degrés).

Au cours d'une étape 110 suivante, le vecteur de transformation V̅ est avantageusement normalisé. Cette normalisation consiste à normaliser les deux sous-vecteurs T̅ et R̅ et éventuellement le paramètre α.

En ce qui concerne le sous-vecteur de translation T, ses trois coordonnées sont normalisées sur au moins une dimension des données du macro-modèle 10 et/ou de la scène tridimensionnelle 20 de sorte que l'amplitude des variations de la norme de ce sous-vecteur de translation autour d'une valeur centrale, quelle qu'elle soit, reste inférieure ou égale à 1. Concrètement, si on note Lx, Ly et Lz les plus grandes dimensions respectives des données du macro-modèle 10 et/ou de la scène tridimensionnelle 20 éventuellement combinées entre elles selon les axes x̅, y̅ et z̅, compte tenu du fait que la matrice 4x4 sélectionnée a été recentrée et que les modèles 12, 14 et 16 sont avantageusement centrés dans le macro-modèle 10, la normalisation du sous-vecteur de translation T peut se faire de la façon suivante : $\vec{{T}_{N}} = \left(\frac{Tx}{Lx / 2}, \frac{Ty}{Ly / 2}, \frac{Tz}{Lz / 2}\right) .$

En pratique, on peut procéder à la normalisation sur une unique valeur L commune aux trois axes, par exemple L = Max (Lx, Ly, Lz), ce qui donne : $\vec{{T}_{N}} = \left(\frac{Tx}{L / 2}, \frac{Ty}{L / 2}, \frac{Tz}{L / 2}\right) .$

En ce qui concerne le sous-vecteur de rotation R̅, il peut être normalisé très simplement de la façon suivante : $\vec{{R}_{N}} = \frac{θ}{π} \vec{u} .$

En ce qui concerne le paramètre α, il peut être normalisé par une taille caractéristique de modèle d'objet pour obtenir une valeur α_{N}.

Il en résulte le vecteur de transformation normalisé V̅_̅{̅N̅}̅ = (T̅_̅{̅N̅}̅, R̅_̅{̅N̅}̅, α_{N}) à sept dimensions ou V̅_̅{̅N̅}̅ = (T̅_̅{̅N̅}̅, R̅_̅{̅N̅}̅) à six dimensions.

Ensuite, au cours d'une étape de test 112, on détecte si la transformation en rotation exprimée par le sous-vecteur normalisé R̅_̅{̅N̅}̅ est proche d'une valeur de césure, en l'occurrence la césure +/- π. C'est le cas si sa norme ∥R̅_̅{̅N̅}̅∥, toujours incluse dans l'intervalle [0 ; 1], est proche de 1 selon un critère prédéterminé. Ce critère peut être lié à la valeur du rayon de recherche RS précité, lequel est alors une fraction de l'intervalle [0 ; 1], par exemple RS ≤ 0,2 ou même RS ≤ 0,1. Selon le test de l'étape 112, si ∥R̅_̅{̅N̅}̅∥ ≥ 1 - RS alors on passe à une étape 114, sinon directement à une étape 116.

L'étape 114 consiste à dupliquer tout vecteur de transformation normalisé V̅_̅{̅N̅}̅ proche de la césure +/- π en dupliquant son sous-vecteur de rotation normalisé R̅_̅{̅N̅}̅ en deux instances liées par un facteur additif de modulo de la façon suivante : $\vec{{R}_{N} \left[1\right]} = \vec{{R}_{N}} = \frac{θ}{π} \vec{u} ,$ et $\vec{{R}_{N} \left[2\right]} = \left(\frac{θ}{π}-2\right) \vec{u} .$

Le facteur additif de modulo est 2 en valeurs normalisées et 2π en valeurs non normalisées. Il en résulte :
V̅_̅{̅N̅}̅[̅1̅]̅ = (T̅_̅{̅N̅}̅, R̅_̅{̅N̅}̅[̅1̅]̅,α_{N}) à sept dimensions ou V̅_̅{̅N̅}̅[̅1̅]̅ = (T̅_̅{̅N̅}̅, R̅_̅{̅N̅}̅[̅1̅]̅) à six dimensions, et
V̅_̅{̅N̅}̅[̅2̅]̅ = (T̅_̅{̅N̅}̅, R̅_̅{̅N̅}̅[̅2̅]̅, α_{N}) à sept dimensions ou V̅_̅{̅N̅}̅[̅2̅]̅ = (T̅_̅{̅N̅}̅, R̅_̅{̅N̅}̅[̅2̅]̅) à six dimensions.

Avantageusement, les deux instances V̅_̅{̅N̅}̅[̅1̅]̅ et V̅_̅{̅N̅}̅[̅2̅]̅ du vecteur de transformation normalisé V̅_̅{̅N̅}̅ restent indiquées comme liées et représentatives du même jeu de paramètres de transformation.

L'étape 116 succède à l'étape 112, ou à l'étape 114 en cas de rotation proche de la césure +/- π. Elle consiste à indexer le vecteur de transformation normalisé V̅_̅{̅N̅}̅, ou ses deux instances V̅_̅{̅N̅}̅[̅1̅]̅ et V̅_̅{̅N̅}̅[̅2̅]̅ en cas de rotation proche de la césure +/- π, dans la structure de recherche initialisée à l'étape 100. L'étape 116 est suivie d'un retour à l'étape 104 pour le traitement d'une autre matrice 4x4 restante, le cas échéant.

La structure de recherche progressivement complétée par l'exécution de la boucle d'étapes 104 à 116 ne sera pas détaillée car connue de l'état de l'art. Elle représente l'espace des vecteurs de transformation obtenus par traitement des jeux de paramètres de transformation issus de l'étape 102. Il s'agit par exemple d'un arbre binaire, notamment un arbre k-d, avantageusement associé à une distance euclidienne. On notera à cet égard que l'expression des vecteurs de transformation telle que définie précédemment, notamment grâce à l'expression des sous-vecteurs de rotation conformément à la présente invention, est particulièrement bien adaptée à une telle distance euclidienne. En variante, la structure de recherche peut prendre une autre forme qu'un arbre : par exemple une représentation graphique ou en réseau hiérarchique, avantageusement associée à une distance euclidienne pour que l'expression des vecteurs de transformation définie précédemment reste adaptée à une telle représentation.

En effet, deux translations proches vectoriellement et en amplitude présentent une distance euclidienne proche exprimée de la façon suivante : $D \left(\vec{{T}_{1}}, \vec{{T}_{2}}\right) = \left‖\vec{{T}_{1}}-\vec{{T}_{2}}\right‖ .$

Mais de même, grâce à l'expression vectorielle proposée pour les rotations, deux rotations proches vectoriellement et en amplitude angulaire présentent une distance euclidienne proche exprimée de la façon suivante : $D \left(\vec{{R}_{1}}, \vec{{R}_{2}}\right) = \left‖\vec{{R}_{1}}-\vec{{R}_{2}}\right‖ = \left‖{θ}_{1}\vec{{u}_{1}}-{θ}_{2}\vec{{u}_{2}}\right‖ .$

Notamment on remarque que deux rotations d'amplitudes angulaires faibles proches de l'angle nul seront considérées comme proches selon cette distance quelle que soit leurs directions.

Ces deux distances sont qualitativement très cohérentes dans l'espace des transformations. De plus, grâce à la normalisation proposée des sous-vecteurs de translation et rotation, elles sont en outre quantitativement très cohérentes, de sorte qu'une distance euclidienne pour les vecteurs de transformation complets peut aisément en être déduite par relation de Pythagore impliquant ces deux distances. Intuitivement, une troisième distance euclidienne entre changements d'échelles peut être très simplement définie et combinée aux deux premières si besoin.

Mais la distance euclidienne entre rotations mérite toutefois d'être adaptée compte tenu de la gestion proposée à l'étape 114 des rotations proches de la césure +/- π. En théorie, elle devrait avantageusement s'exprimer sous la forme : $D \left(\vec{{R}_{1}}, \vec{{R}_{2}}\right) = {min}_{j , k ∈ {ℕ}^{2}} \left‖\left({θ}_{1}-2jπ\right)\vec{{u}_{1}}-\left({θ}_{2}-2kπ\right)\vec{{u}_{2}}\right‖ ,$ ou de façon normalisée sous la forme : $D \left(\vec{{R}_{1}}, \vec{{R}_{2}}\right) = {min}_{j , k ∈ {ℕ}^{2}} \left‖\left(\frac{{θ}_{1}}{π}-2j\right)\vec{{u}_{1}}-\left(\frac{{θ}_{2}}{π}-2k\right)\vec{{u}_{2}}\right‖ .$

Une telle distance est complexe à calculer compte tenu de l'ensemble infini des valeurs possibles pour les indices j et k. Mais en pratique, il peut être démontré que cet ensemble peut être largement réduit à j, k ∈ {0,1}², j + k ≤ 1 car : ${min}_{j , k ∈ {ℕ}^{2}} \left‖\left({θ}_{1}-2jπ\right)\vec{{u}_{1}}-\left({θ}_{2}-2kπ\right)\vec{{u}_{2}}\right‖ = {min}_{j , k ∈ {\left\{0, 1\right\}}^{2} , j + k \leq 1} \left‖\left({θ}_{1}-2jπ\right)\vec{{u}_{1}}-\left({θ}_{2}-2kπ\right)\vec{{u}_{2}}\right‖$ et ${min}_{j , k ∈ {ℕ}^{2}} \left‖\left(\frac{{θ}_{1}}{π}-2j\right)\vec{{u}_{1}}-\left(\frac{{θ}_{2}}{π}-2k\right)\vec{{u}_{2}}\right‖ = {min}_{j , k ∈ {\left\{0, 1\right\}}^{2} , j + k \leq 1} \left‖\left(\frac{{θ}_{1}}{π}-2j\right)\vec{{u}_{1}}-\left(\frac{{θ}_{2}}{π}-2k\right)\vec{{u}_{2}}\right‖ .$

Il suffit donc de calculer trois distances euclidiennes et de retenir la plus petite. Il s'agit bien au final d'une distance mathématique tout à fait adaptée à la structure de recherche et à une classification automatique par recherche de voisins pour une expansion progressive de classes.

L'étape 118 est une étape d'initialisation de la classification automatique réalisée par exécution du troisième programme 58 à l'aide du processeur 50. Au cours de cette étape, le nombre de classes est initialisé à 0 et une pile de traitement P, destinée à recevoir des vecteurs de transformation, est initialisée à l'ensemble vide. Il peut également être déterminé *a priori,* pour chaque vecteur de transformation indexé dans la structure de recherche, l'ensemble des vecteurs de transformation voisins qui ont au moins une instance à une distance, telle que définie précédemment, inférieure à RS de la ou des instances de ce vecteur de transformation dans la structure de recherche. Pour chaque vecteur de transformation de la structure de recherche, cet ensemble de voisins est conservé en mémoire 44. A ce stade également, chaque vecteur de transformation ayant un nombre de voisins inférieur à NV est avantageusement considéré comme une donnée aberrante (de l'anglais « outlier ») et écarté pour la suite du procédé.

L'étape 118 est suivie d'une deuxième boucle d'étapes 120 à 136 réalisée par exécution du troisième programme 58 pour une classification automatique des vecteurs de transformation qui ne sont pas considérés comme des données aberrantes, chaque classe étant destinée à être représentative d'une unique instance d'objet dans la scène tridimensionnelle 20 et d'un unique vecteur de transformation représentatif de cette classe pour une mise en correspondance avec un unique modèle du macro-modèle tridimensionnel 10.

La première étape 120 de cette deuxième boucle d'étapes est un test réalisé pour savoir s'il reste encore au moins un vecteur de transformation de la structure de recherche, non considéré comme une valeur aberrante, à classer. Si oui, un tel vecteur de transformation est sélectionné et le procédé passe à une deuxième étape 122 de la deuxième boucle d'étapes. Si non, il passe à une étape 138 de sortie de la deuxième boucle d'étapes.

L'étape 122 consiste à créer une nouvelle classe pour le vecteur de transformation sélectionné à l'étape 120.

Ensuite, au cours d'une étape 124, le vecteur de transformation sélectionné est ajouté à la pile de traitement P.

L'étape 126 suivante consiste à tester le contenu de la pile de traitement P. S'il est vide, le procédé retourne à l'étape 120. Sinon, on passe à une étape 128.

L'étape 128 consiste à extraire un vecteur de transformation de la pile de traitement P.

Au cours d'une étape 130 suivante, on cherche les voisins du vecteur de transformation extrait. Conformément à ce qui a été indiqué précédemment aux étapes 114 et 116, cette recherche prend en compte la ou les instances de chaque vecteur de transformation concerné, notamment les deux instances de chaque vecteur de transformation dupliqué. Le résultat est immédiatement extrait de la mémoire 44 si les voisins ont été préalablement déterminés à l'étape 118. On notera toutefois que la détermination de voisins dans la structure de recherche peut se faire au cours de l'étape 130 elle-même pour solliciter par exemple moins de mémoire.

Ensuite, une étape de test 132 vérifie le nombre de voisins si celui-ci a été déterminé à l'étape 130. S'il est inférieur à NV, le vecteur de transformation extrait est considéré comme une donnée aberrante et le procédé retourne à l'étape 126. Sinon, on passe à une étape 134.

L'étape 134 consiste à ajouter les voisins identifiés à l'étape 130 dans la pile de traitement P.

Ensuite, au cours d'une dernière étape 136 de la deuxième boucle d'étapes, le vecteur de transformation extrait est ajouté dans la classe créée à l'étape 122. Un indice de confiance et un vecteur de transformation représentatif de la classe sont mis à jour en tenant compte du vecteur de transformation qui vient d'être ajouté et de son indice de confiance associé. Par exemple, l'indice de confiance de la classe peut être défini comme étant égal à la somme des indices de confiance des vecteurs de transformation qui la constituent. Par exemple également, le vecteur de transformation représentatif de la classe peut être défini comme étant la moyenne ou la médiane vectorielle des vecteurs de transformation qui la constituent. A cet égard, l'expression proposée pour les sous-vecteurs de rotation est particulièrement adaptée à un tel calcul de moyenne ou médiane.

Pour une bonne gestion de la césure +/-π, la norme du sous-vecteur de rotation du vecteur de transformation extrait et/ou celle de la moyenne résultante peuvent devoir être ramenées dans l'intervalle [0 ; 1] en soustrayant la valeur 2 autant fois que nécessaire. De façon plus précise, la moyenne déjà calculée dans la classe créée à l'étape 122 peut être plus proche de l'une ou l'autre des instances du vecteur de transformation extrait qui vient d'être ajouté lorsqu'il a été dupliqué, et c'est alors l'instance la plus proche qu'il convient de retenir pour le calcul de la moyenne, même si elle sort de l'intervalle [0 ; 1]. De ce fait, la moyenne elle-même peut sortir de l'intervalle [0 ; 1], de sorte qu'il convient de la ramener elle aussi dans cet intervalle. En résumé, même s'il est souhaité de toujours ramener la moyenne dans l'intervalle [0 ; 1], cela peut nécessiter des étapes intermédiaires dans lesquelles les calculs se font hors de cet intervalle du fait des duplications.

A l'issue de l'étape 136, le procédé retourne à l'étape 126.

On notera que les étapes 128 à 136 peuvent être exécutées en parallèle sur plusieurs vecteurs de transformation de la pile de traitement P pour accélérer le traitement. Dans ce cas, l'accès à la pile de traitement P doit toutefois être synchronisé. Dans ce cas également, il est avantageux de ne pas avoir déterminé les voisins dans la structure de recherche à l'étape 118 mais seulement à l'étape 130 pour gagner de la mémoire. Au contraire, si l'on préfère déterminer les voisins de chaque vecteur de transformation par anticipation, alors il est préférable de le faire en parallèle à l'étape 118 sans exécuter les étapes 128 à 136 en parallèle.

On notera également que la deuxième boucle d'étapes 120 à 136 constitue une classification itérative par expansion progressive de classe. Le nombre de classes obtenu dépend directement du nombre d'itérations exécutées puisqu'une nouvelle classe est créée à chaque exécution de l'étape 122. En particulier, si la première itération de cette deuxième boucle d'étapes échoue à créer une classe lors de la première étape de test 120, alors aucune classe n'est retournée et c'est déjà en soi un résultat pertinent : cela signifie qu'aucune instance d'objet n'a été détectée dans la scène tridimensionnelle 20.

L'étape 138 est la première étape d'une troisième boucle d'étapes 138 à 146 réalisée par exécution du quatrième programme 60 à l'aide du processeur 50 pour l'exécution d'un traitement sur chaque vecteur de transformation représentatif de chaque classe constituée au cours de la deuxième boucle d'étapes 120 à 136 en vue de le transcoder en un jeu de paramètres exprimé selon un format souhaité en sortie, par exemple le format en matrice 4x4 tel que fourni à l'issue de l'étape 102 pour chaque jeu de paramètres de transformation point à point.

Cette étape 138 est un test réalisé pour savoir s'il reste encore au moins un vecteur de transformation représentatif d'une classe à traiter. Si oui, un tel vecteur de transformation est sélectionné et le procédé passe à une deuxième étape 140 de la troisième boucle d'étapes. Si non, il passe à une étape 148 de sortie de la troisième boucle d'étapes. Cette étape de test permet en particulier d'éliminer toute classe ne comportant aucun élément, c'est-à-dire toute classe représentative d'une transformation indéfinie, nulle ou invalide, avant de passer à l'étape 140.

L'étape 140 consiste à inverser, sur le vecteur de transformation représentatif sélectionné, l'opération de normalisation réalisée à l'étape 110 sur chaque vecteur de transformation point à point.

Ensuite, une étape 142 consiste à inverser, sur le vecteur de transformation représentatif sélectionné, l'opération de transcodage réalisée à l'étape 108 sur chaque matrice 4x4 de transformation point à point, pour obtenir le format d'une matrice 4x4 de transformation correspondant au vecteur de transformation représentatif sélectionné. A ce stade, si le sous-vecteur de rotation présente une norme trop faible, c'est-à-dire inférieure à un seuil prédéterminé, alors la rotation peut être ramenée à l'identité en considérant que son axe n'est pas défini.

Ensuite, une étape 144 consiste à inverser, sur la matrice 4x4 obtenue à l'étape précédente, l'opération de recentrage réalisée à l'étape 106 sur chaque matrice 4x4 de transformation point à point.

Enfin, une étape 146 consiste à déterminer, pour la classe du vecteur de transformation représentatif sélectionné à l'étape 138, quel est le modèle d'objet 12, 14 ou 16 qui est le plus associé aux vecteurs de transformation inclus dans cette classe. Cet unique modèle d'objet est alors associé à cette classe. Au cours de cette étape et de façon optionnelle, il est possible de réviser l'indice de confiance de la classe en fonction de la disposition des points de cet unique modèle qui sont visés par les vecteurs de transformation de la classe. Par exemple, si les vecteurs de transformation concernent des points trop proches les uns des autres et/ou alignés et/ou situés sur un même plan dans le modèle, il est possible de réduire l'indice de confiance de la classe. Une façon de procéder est de calculer une matrice 3x3 de covariance des points concernés dans le modèle puis de pondérer l'indice de confiance de la classe par une fonction des trois valeurs propres de cette matrice 3x3, par exemple une puissance (par exemple 1/6) du produit de ces valeurs propres. Ainsi, dès lors qu'une valeur propre est nulle, l'indice de confiance de la classe est ramené à 0.

Le procédé retourne ensuite à l'étape 138.

L'étape 148 consiste à ordonner les classes constituées au cours de la deuxième boucle d'étapes en fonction de leurs indices de confiance. Pour les classes d'indice de confiance nul, elles peuvent être classées en fonction du nombre d'éléments qu'elles contiennent.

Enfin, au cours d'une dernière étape 150 les matrices 4x4 représentatives des classes ordonnées sont retournées avec les correspondances point à point retenues respectivement dans ces classes, les modèles et les indices de confiance respectifs en tant que résultat du procédé de détection et localisation tridimensionnelle d'instances d'objets dans la scène tridimensionnelle 20. Pour chaque classe, l'instance d'objet identifiée dans la scène tridimensionnelle 20 contient l'ensemble des points d'origine des correspondances point à point constitutives de la classe.

Un autre mode de réalisation avantageux permet de simplifier l'étape 146. Il s'agit de limiter la recherche de voisins pour chaque vecteur de transformation, dans l'étape 118 ou 130, à des vecteurs de transformation pointant vers le même et unique modèle d'objet. Dans ce cas, dès l'étape 122, la nouvelle classe créée peut être associée au modèle d'objet vers lequel pointe le vecteur de transformation sélectionné à l'étape 120, sachant que la recherche de voisins se fait alors parmi les vecteurs de transformation pointant vers ce modèle d'objet. Il n'y a donc plus besoin de déterminer le modèle d'objet à associer à chaque classe lors des exécutions, le cas échéant, de l'étape 146.

Il apparaît clairement qu'un procédé de détection et de localisation tridimensionnelle d'au moins une instance d'objet dans une scène tridimensionnelle tel que celui décrit précédemment permet, grâce au transcodage opéré sur les jeux de paramètres de transformations pour les exprimer vectoriellement avec des sous-vecteurs de rotations prenant la forme R̅ = θu̅ et pour les exploiter ensuite dans une classification automatique basée sur des mesures de distances entre ces expressions vectorielles, de surmonter le problème d'anisotropie de certaines méthodes de l'état de l'art, de surmonter également celui de blocage de cardan propre aux expressions à angles d'Euler, et d'optimiser la classification automatique en s'adaptant efficacement aux mesures de distances et aux calculs de moyennes.

En particulier, il apparaît qu'il est alors possible d'obtenir en une seule exécution la mise en correspondance précise de plusieurs instances d'objets de la scène tridimensionnelle avec plusieurs modèles d'objets du méta-modèle, comme le montre l'exécution de la deuxième boucle d'étapes 120 à 136, et ce sans préjuger du nombre d'instances et de modèles d'objets à mettre en correspondance. Dans une application de dévracage, cela permet à plusieurs robots de saisir en même temps plusieurs instances d'objets dans la scène tridimensionnelle. Cela permet aussi de gérer de façon élégante les symétries d'objets en traitant chacune d'elles comme une transformation différente. D'une façon plus générale, la mise en correspondance de plusieurs instances d'objets en une seule exécution est avantageuse en termes de temps de calcul. Elle est également avantageuse parce que les indices de confiance de classes obtenues en sortie sont alors cohérents et comparables entre les différents modèles d'objets, permettant de conclure quel modèle a été détecté de la façon la plus fiable avec quelle disposition.

Il est également aisé, comme montré dans l'exemple non limitatif de mode de réalisation illustré par la figure 4, d'utiliser une structure de recherche de l'état de l'art pour accélérer et simplifier davantage la classification automatique.

Il est également aisé d'injecter des contraintes de connaissances a priori en les spécifiant directement dans l'espace de transformation tel que proposé. On peut ainsi par exemple imposer qu'une instance d'objet particulier est à retrouver dans la scène tridimensionnelle sur un plan connu ou dans une zone connue ou selon une disposition connue à l'avance.

Il est également aisé d'intégrer ce procédé dans une chaîne algorithmique de recalage existante.

Par ailleurs, un tel procédé est insensible au bruit autour des petits angles de rotations puisque les petites rotations sont toutes proches les unes des autres grâce à l'expression proposée.

Grâce à la normalisation optionnellement proposée des expressions vectorielles des jeux de paramètres de transformation, les translations et rotations sont en outre définies dans des intervalles similaires d'un même espace à plusieurs dimensions sans nécessiter de gestion de leur pondération. En particulier, la normalisation proposée pour les translations peut être obtenue automatiquement en fonction des dimensions de la scène 20 ou du méta-modèle 10 sans dépendre d'un quelconque paramètre.

Grâce à la duplication optionnellement proposée des représentations vectorielles lorsque les rotations sont proches de la césure +/- π et à la prise en compte de cette duplication possible dans la mesure des distances entre vecteurs de transformation, cette césure ne pose plus de problème. Compte-tenu de l'expression proposée pour les transformations en rotation, cette césure est en outre portée par une seule dimension, celle de l'amplitude de la représentation vectorielle dans la direction de la normale au plan de rotation.

Grâce à l'expansion progressive des classes par une recherche itérative de plus proches voisins, aucune forme prédéterminée des classes n'est imposée, en particulier aucune forme ellipsoïdale, le nombre de classes n'est pas non plus imposé et les données aberrantes sont aisément mises de côté : elles sont détectées en tant que telles et le nombre d'entre elles intégrées par erreur dans une classe est minimisé.

Grâce à l'efficacité de la classification automatique résultante, un procédé tel que celui décrit précédemment s'avère très tolérant aux bruits de capteurs 3D et particulièrement robuste, notamment parce qu'il est fortement indépendant des conditions initiales. Il permet l'utilisation de capteurs peu coûteux et rapides. Il permet aussi d'envisager à l'étape 102 des descripteurs locaux et/ou globaux de moins bonne qualité que les approches concurrentes de l'état de l'art pour un même résultat. En variante, sachant que des descripteurs de moins bonne qualité sont également plus simples à calculer, il est alors possible de calculer ces descripteurs en de plus nombreux endroits à temps de calcul constant pour un meilleur résultat.

De plus, un tel procédé s'avère en pratique au moins aussi rapide que ceux de l'état de l'art et peut être accéléré par une exécution en parallèle de certaines étapes telles que les étapes 128 à 136 et la partie de recherche de voisins de l'étape 118. Cet avantage permet d'envisager des applications, jusqu'à présent inaccessibles, nécessitant des traitements en temps réel ou proches du temps réel.

On notera par ailleurs que l'invention n'est pas limitée aux modes de réalisation décrits précédemment.

Ainsi dans les modes de réalisation préférés détaillés précédemment, ce sont des matrices 4x4 qui sont fournies à l'issue de l'étape 102. Mais d'autres formes de jeux de paramètres de transformation pourraient être fournies sans sortir du périmètre de la présente invention. En variante, une expression de chaque jeu de paramètres de transformation dans un système de coordonnées à au moins six dimensions incluant trois dimensions pour la translation et trois dimensions pour la rotation pourrait être fournie à l'issue de l'étape 102, avant le transcodage proposé à l'étape 108.

Il apparaîtra plus généralement à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Procédé mis en œuvre par un ordinateur de détection et de localisation tridimensionnelle d'au moins une instance (22, 24, 26, 28, 30) d'au moins un objet dans des données de représentation d'une scène tridimensionnelle (20) par comparaison avec au moins un modèle (12, 14, 16) dudit au moins un objet dans des données de représentation d'un macro-modèle tridimensionnel (10) dudit au moins un objet, comportant les étapes suivantes :
- obtention (102) de jeux de paramètres de transformation en translation et rotation pour des mises en correspondance tridimensionnelle respectives de points particuliers de chaque instance (22, 24, 26, 28, 30) supposée dudit au moins un objet dans la scène tridimensionnelle (20) avec leurs dispositions dans le macro-modèle tridimensionnel (10),
- expression (106, 108, 110, 112, 114, 116) de chaque jeu de paramètres de transformation dans un système de coordonnées à plusieurs dimensions incluant au moins une dimension pour la translation et au moins une dimension pour la rotation,
- classification automatique (118, 120, 122, 124, 126, 128, 130, 132, 134, 136) desdits jeux de paramètres de transformation sur la base d'une fonction de mesure de distances, chaque classe éventuellement obtenue étant représentative d'une unique instance (22, 24, 26, 28, 30) dudit au moins un objet trouvée dans la scène tridimensionnelle (20) et d'un unique jeu de paramètres de transformation pour une mise en correspondance avec un unique modèle (12, 14) dans le macro-modèle tridimensionnel (10),
**caractérisé en ce que** :
- l'expression (106, 108, 110, 112, 114, 116) de chaque jeu de paramètres de transformation se fait (108) sous la forme d'un vecteur de transformation incluant une expression de ladite au moins une dimension de rotation en tant que coordonnée(s) d'un sous-vecteur de rotation de ce vecteur de transformation, telle que l'orientation du sous-vecteur de rotation est normale au plan de rotation et sa norme est en relation monotone croissante avec l'angle de rotation exprimé entre 0 et π,
- la fonction de mesure de distances sur la base de laquelle la classification automatique (118, 120, 122, 124, 126, 128, 130, 132, 134, 136) est exécutée est une fonction de mesure de distances entre lesdits vecteurs de transformation.

2. Procédé de détection et de localisation selon la revendication 1, dans lequel ladite au moins une dimension de translation est exprimée en tant que coordonnée(s) d'un sous-vecteur de translation du vecteur de transformation et :
- chaque coordonnée du sous-vecteur de translation est normalisée (110) sur une dimension des données du macro-modèle (10) et/ou de la scène tridimensionnelle (20), de sorte qu'une amplitude de variations de la norme de ce sous-vecteur de translation reste inférieure ou égale à 1, et
- chaque coordonnée du sous-vecteur de rotation est normalisée (110) en imposant que la norme du sous-vecteur de rotation soit égale à l'angle de rotation divisé par π lorsqu'il est exprimé entre 0 et π.

3. Procédé de détection et de localisation selon la revendication 1 ou 2, dans lequel la classification automatique (118, 120, 122, 124, 126, 128, 130, 132, 134, 136) desdits jeux de paramètres de transformation est une classification itérative par expansion progressive de classe.

4. Procédé de détection et de localisation selon la revendication 3, dans lequel :
- l'étape (106, 108, 110, 112, 114, 116) d'expression de chaque jeu de paramètres de transformation comporte une indexation (116) de chaque vecteur de transformation obtenu dans une structure de recherche, notamment un arbre de recherche, notamment un arbre binaire, notamment un arbre k-d,
- l'expansion progressive de chaque classe au cours de l'étape itérative de classification automatique (118, 120, 122, 124, 126, 128, 130, 132, 134, 136) est exécutée par recherche (130) de voisins dans la structure de recherche à l'aide de ladite fonction de mesure de distances entre lesdits vecteurs de transformation.

5. Procédé de détection et de localisation selon la revendication 4, dans lequel, lors de l'étape (106, 108, 110, 112, 114, 116) d'expression de chaque jeu de paramètres de transformation, on détecte (112) pour chaque sous-vecteur de rotation si sa norme est proche d'une valeur de césure, cette dernière correspondant à une valeur +/- π de l'angle de rotation, à un premier paramètre de voisinage près et on duplique (114) chaque vecteur de transformation dont la norme du sous-vecteur de rotation est détectée proche de la valeur de césure en deux instances dont les sous-vecteurs de rotations sont liés par un facteur additif de modulo que l'on indexe (116) dans la structure de recherche.

6. Procédé de détection et de localisation selon la revendication 5, dans lequel, lors de l'étape de classification automatique (118, 120, 122, 124, 126, 128, 130, 132, 134, 136), chaque vecteur de transformation ayant un nombre de voisins inférieur à un deuxième paramètre de voisinage prédéterminé (118, 132) est considéré comme une donnée aberrante et écarté de toute classe résultant de la classification automatique.

7. Procédé de détection et de localisation selon l'une quelconque des revendications 1 à 6, dans lequel, lors de l'expression (106, 108, 110, 112, 114, 116) de chaque jeu de paramètres de transformation dans le système de coordonnées à plusieurs dimensions, on impose que la norme du sous-vecteur de rotation soit proportionnelle à l'angle de rotation exprimé entre 0 et π.

8. Procédé de détection et de localisation selon l'une quelconque des revendications 1 à 7, dans lequel les données de représentation de la scène tridimensionnelle (20) comportent une représentation numérique en imagerie tridimensionnelle de cette scène et les données de représentation du macro-modèle tridimensionnel (10) comportent une représentation numérique en imagerie tridimensionnelle de ce macro-modèle.

9. Programme d'ordinateur (54, 56, 58, 60) téléchargeable depuis un réseau de communication et/ou enregistré sur un support (52) lisible par ordinateur et/ou exécutable par un processeur (50), **caractérisé en ce qu'**il comprend des instructions pour l'exécution des étapes d'un procédé de détection et de localisation selon l'une quelconque des revendications 1 à 8, lorsque ledit programme est exécuté sur un ordinateur.

10. Système (40) de détection et de localisation tridimensionnelle d'au moins une instance (22, 24, 26, 28, 30) d'au moins un objet dans des données de représentation d'une scène tridimensionnelle (20) par comparaison avec au moins un modèle (12, 14, 16) dudit au moins un objet dans des données de représentation d'un macro-modèle tridimensionnel (10) dudit au moins un objet, le système comportant :
- au moins une mémoire (44) de stockage des données de représentation de la scène tridimensionnelle (20) et des données de représentation du macro-modèle tridimensionnel (10), et
- un processeur (50) de mise en correspondance de chaque instance (22, 24, 26, 28, 30) dudit au moins un objet dans la scène tridimensionnelle (20) avec un unique modèle (12, 14) dans le macro-modèle tridimensionnel (10), programmé pour l'exécution des étapes d'un procédé de détection et de localisation selon l'une quelconque des revendications 1 à 8.

## Patentansprüche

1. Verfahren, das von einem Rechner zur dreidimensionalen Erkennung und Ortung mindestens einer Instanz (22, 24, 26, 28, 30) von mindestens einem Objekt in Darstellungsdaten einer dreidimensionalen Szene (20) durch Vergleich mit mindestens einem Modell (12, 14, 16) des mindestens einen Objekts in Darstellungsdaten eines dreidimensionalen Makromodells (10) des mindestens einen Objekts durchgeführt wird, umfassend die folgenden Schritte:
- Erhalten (102) von Parametersätzen für die Transformation in Translation und Rotation für die jeweilige dreidimensionale Zuordnungen bestimmter Punkte jeder angenommenen Instanz (22, 24, 26, 28, 30) des mindestens einen Objekts in der dreidimensionalen Szene (20) mit ihren Anordnungen in dem dreidimensionalen Makromodell (10) handelt,
- Ausdrücken (106, 108, 110, 112, 114, 116) jedes Transformationsparametersatzes in einem mehrdimensionalen Koordinatensystem, das mindestens eine Dimension für die Translation und mindestens eine Dimension für die Rotation umfasst,
- automatisches Klassifizieren (118, 120, 122, 124, 126, 128, 130, 132, 134, 136) der Transformationsparametersätze auf Basis einer Abstandsmessfunktion, wobei jede eventuell erhaltene Klasse eine einzige Instanz (22, 24, 26, 28, 30) des mindestens einen in der dreidimensionalen Szene (20) gefundenen Objekts und einen einzigen Transformationsparametersatz für eine Zuordnung zu einem einzigen Modell (12, 14) in dem dreidimensionalen Makromodell (10) darstellt,
**dadurch gekennzeichnet, dass**:
- das Ausdrücken (106, 108, 110, 112, 114, 116) jedes Transformationsparametersatzes in Form eines Transformationsvektors erfolgt (108), der einen Ausdruck der mindestens einen Rotationsdimension als Koordinate(n) eines Rotationsuntervektors dieses Transformationsvektors einschließt, so dass die Orientierung des Rotationsuntervektors normal zu der Rotationsebene ist und seine Norm in einem monoton steigenden Verhältnis zu dem Rotationswinkel steht, der zwischen 0 und π ausgedrückt wird,
- die Abstandsmessfunktion, auf deren Basis die automatische Klassifizierung (118, 120, 122, 124, 126, 128, 130, 132, 134, 136) ausgeführt wird, eine Funktion zur Messung von Abständen zwischen den Transformationsvektoren ist.

2. Erkennungs- und Ortungsverfahren nach Anspruch 1, wobei die mindestens eine Translationsdimension als Koordinate(n) eines Translationsuntervektors des Transformationsvektors ausgedrückt wird und:
- jede Koordinate des Translationsuntervektors auf eine Dimension der Daten des Makromodells (10) und/oder der dreidimensionalen Szene (20) normalisiert wird (110), so dass eine Schwankungsamplitude der Norm dieses Translationsuntervektors kleiner oder gleich 1 bleibt, und
- jede Koordinate des Rotationsuntervektors normalisiert wird (110), indem gefordert wird, dass die Norm des Rotationsuntervektors gleich dem Rotationswinkel geteilt durch π ist, wenn er zwischen 0 und π ausgedrückt wird.

3. Erkennungs- und Ortungsverfahren nach Anspruch 1 oder 2, wobei die automatische Klassifizierung (118, 120, 122, 124, 126, 128, 130, 132, 134, 136) der Transformationsparametersätze eine iterative Klassifizierung durch schrittweise Erweiterung der Klassen ist.

4. Erkennungs- und Ortungsverfahren nach Anspruch 3, wobei:
- der Schritt (106, 108, 110, 112, 114, 116) des Ausdrückens jedes Transformationsparametersatzes eine Indexierung (116) jedes in einer Suchstruktur, insbesondere einem Suchbaum, insbesondere einem binären Baum, insbesondere einem k-d-Baum, erhaltenen Transformationsvektors umfasst,
- die schrittweise Erweiterung jeder Klasse während des iterativen Schritts der automatischen Klassifizierung (118, 120, 122, 124, 126, 128, 130, 132, 134, 136) durch eine Nachbarsuche (130) in der Suchstruktur unter Verwendung der Funktion zur Messung von Abständen zwischen den Transformationsvektoren ausgeführt wird.

5. Erkennungs- und Ortungsverfahren nach Anspruch 4, wobei bei Schritt (106, 108, 110, 112, 114, 116) des Ausdrückens jedes Transformationsparametersatzes für jeden Rotationsuntervektor erkannt wird (112), ob seine Norm nahe an einem Trennungswert liegt, wobei letzterer einem Wert von +/- π des Rotationswinkels entspricht, abgesehen von einem ersten Nachbarparameter, und jeder Transformationsvektor, dessen Norm des Rotationsuntervektors nahe dem Trennungswert erkannt wird, in zwei Instanzen dupliziert wird (114), deren Rotationsuntervektoren durch einen additiven Modulo-Faktor verbunden sind, der in der Suchstruktur indexiert wird (116).

6. Erkennungs- und Ortungsverfahren nach Anspruch 5, wobei bei dem Schritt der automatischen Klassifizierung (118, 120, 122, 124, 126, 128, 130, 132, 134, 136) jeder Transformationsvektor mit einer Anzahl von Nachbarn, die kleiner ist als ein zweiter vorbestimmter Nachbarparameter (118, 132), als Ausreißer betrachtet und von jeder Klasse ausgeschlossen wird, die sich aus der automatischen Klassifizierung ergibt.

7. Erkennungs- und Ortungsverfahren nach einem der Ansprüche 1 bis 6, wobei bei dem Ausdrücken (106, 108, 110, 112, 114, 116) jedes Transformationsparametersatzes in dem mehrdimensionalen Koordinatensystem gefordert wird, dass die Norm des Rotationsuntervektors proportional zu dem Rotationswinkel zwischen 0 und π sein muss.

8. Erkennungs- und Ortungsverfahren nach einem der Ansprüche 1 bis 7, wobei die Darstellungsdaten der dreidimensionalen Szene (20) eine digitale dreidimensionale bildgebende Darstellung dieser Szene umfassen und die Darstellungsdaten des dreidimensionalen Makromodells (10) eine digitale dreidimensionale bildgebende Darstellung dieses Makromodells umfassen.

9. Computerprogramm (54, 56, 58, 60), das von einem Kommunikationsnetzwerk herunterladbar und/oder auf einem computerlesbaren Medium (52) gespeichert und/oder von einem Prozessor (50) ausführbar ist, **dadurch gekennzeichnet, dass** es Befehle zur Ausführung der Schritte eines Erkennungs-und Ortungsverfahrens nach einem der Ansprüche 1 bis 8 umfasst, wenn das Programm auf einem Computer ausgeführt wird.

10. System (40) zur dreidimensionalen Erkennung und Ortung mindestens einer Instanz (22, 24, 26, 28, 30) von mindestens einem Objekt in Darstellungsdaten einer dreidimensionalen Szene (20) durch Vergleich mit mindestens einem Modell (12, 14, 16) des mindestens einen Objekts in Darstellungsdaten eines dreidimensionalen Makromodells (10) des mindestens einen Objekts, wobei das System umfasst:
- mindestens einen Speicher (44) zum Speichern der Darstellungsdaten der dreidimensionalen Szene (20) und der Darstellungsdaten des dreidimensionalen Makromodells (10), und
- einen Prozessor (50) zum Abgleichen jeder Instanz (22, 24, 26, 28, 30) des mindestens einen Objekts in der dreidimensionalen Szene (20) mit einem einzigen Modell (12, 14) in dem dreidimensionalen Makromodell (10), das für die Durchführung der Schritte eines Erkennungs- und Ortungsverfahrens nach einem der Ansprüche 1 bis 8 programmiert ist.

## Claims

1. A computer-implemented method for the detection and three-dimensional localisation of at least one instance (22, 24, 26, 28, 30) of at least one object in representation data of a three-dimensional scene (20) by comparison with at least one model (12, 14, 16) of said at least one object in representation data of a three-dimensional macro-model (10) of said at least one object, comprising the following steps:
- obtaining (102) sets of translation and rotation transformation parameters for respective three-dimensional mappings of specific points of each presumed instance (22, 24, 26, 28, 30) of said at least one object in the three-dimensional scene (20) with their positions in the three-dimensional macro-model (10),
- expression (106, 108, 110, 112, 114, 116) of each set of transformation parameters in a multi-dimensional coordinate system comprising at least one dimension for translation and at least one dimension for rotation,
- automatic classification (118, 120, 122, 124, 126, 128, 130, 132, 134, 136) of said sets of transformation parameters based on a distance measurement function, each class potentially obtained being representative of a single instance (22, 24, 26, 28, 30) of said at least one object found in the three-dimensional scene (20) and of a single set of transformation parameters for mapping to a single model (12, 14) in the three-dimensional macro-model (10),
**characterised in that**:
- the expression (106, 108, 110, 112, 114, 116) of each set of transformation parameters is given (108) in the form of a transformation vector including an expression of said at least one dimension for rotation as the coordinate(s) of a rotational sub-vector of this transformation vector, such that the orientation of the rotational sub-vector is normal to the plane of rotation and its norm is in a monotonically increasing relationship with the angle of rotation expressed between 0 and π,
- the distance measurement function on the basis of which the automatic classification (118, 120, 122, 124, 126, 128, 130, 132, 134, 136) is carried out is a function for measuring distances between said transformation vectors.

2. The method for detection and localisation according to claim 1, wherein the at least one dimension for translation is expressed as the coordinate(s) of a translational sub-vector of the transformation vector and:
- each coordinate of the translation sub-vector is normalised (110) with respect to a dimension of the macro-model data (10) and/or of the three-dimensional scene (20), such that the range of variation in the norm of this translational sub-vector remains less than or equal to 1, and
- each coordinate of the rotational subvector is normalised (110) by ensuring that the norm of the rotational subvector is equal to the angle of rotation divided by π when expressed as a value between 0 and π.

3. The method for detection and localisation according to claim 1 or 2, wherein the automatic classification (118, 120, 122, 124, 126, 128, 130, 132, 134, 136) of said sets of transformation parameters is an iterative classification by progressive class expansion.

4. The method for detection and localisation according to claim 3, wherein:
- the step (106, 108, 110, 112, 114, 116) for expression of each set of transformation parameters comprises indexing (116) each transformation vector obtained into a search structure, in particular a search tree, in particular a binary tree, in particular a k-d tree,
- the gradual expansion of each class during the iterative automatic classification step (118, 120, 122, 124, 126, 128, 130, 132, 134, 136) is carried out by searching (130) for neighbours in the search structure using said function for measuring distances between said transformation vectors.

5. The method for detection and localisation according to claim 4, wherein, during the step (106, 108, 110, 112, 114, 116) for expression of each set of transformation parameters, it is detected (112) for each rotational sub-vector whether its norm is close to a cut-off value, the latter corresponding to a value of +/- π of the rotation angle, to within a first neighbourhood parameter, and each transformation vector for which the norm of the rotational subvector is detected as being close to the cut-off value is duplicated (114) into two instances, whose rotational subvectors are linked by a modulo additive factor, which is indexed (116) in the search structure.

6. The method for detection and localisation according to claim 5, wherein, during the automatic classification step (118, 120, 122, 124, 126, 128, 130, 132, 134, 136), each transformation vector having a number of neighbours less than a second predetermined neighbourhood parameter (118, 132) is considered an outlier and excluded from any class resulting from the automatic classification.

7. The method for detection and localisation according to any of claims 1 to 6, wherein, when expressing (106, 108, 110, 112, 114, 116) each set of transformation parameters in the multi-dimensional coordinate system, it is stipulated that the norm of the rotational subvector must be proportional to the angle of rotation, expressed as a value between 0 and π.

8. The method for detection and localisation according to any of claims 1 to 7, wherein the data representing the three-dimensional scene (20) comprise a digital three-dimensional image representation of that scene, and the data representing the three-dimensional macro-model (10) comprise a digital three-dimensional image representation of that macro-model.

9. A computer programme (54, 56, 58, 60) downloadable from a communications network and/or stored on a computer-readable medium (52) and/or executable by a processor (50), **characterised in that** it comprises instructions for carrying out the steps of a detection and localisation method according to any of claims 1 to 8, when said programme is executed on a computer.

10. A system (40) for three-dimensional detection and localisation of at least one instance (22, 24, 26, 28, 30) of at least one object in data representing a three-dimensional scene (20) by comparison with at least one model (12, 14, 16) of said at least one object in data representing a three-dimensional macro-model (10) of said at least one object, the system comprising:
- at least one memory (44) for storing data representing the three-dimensional scene (20) and data representing the three-dimensional macro-model (10), and
- a processor (50) for mapping each instance (22, 24, 26, 28, 30) of said at least one object in the three-dimensional scene (20) to a single model (12, 14) in the three-dimensional macro-model (10), programmed to carry out the steps of a detection and localisation method according to any of claims 1 to 8.
